# EUROPÄISCHE PATENTSCHRIFT

(11) **EP 4 236 371 B1**
(45) Veröffentlichungstag und Bekanntmachung des Hinweises auf die Patenterteilung: **26.11.2025**
(21) Anmeldenummer: 23155338.9
(22) Anmeldetag: 07.02.2023
(51) Int. Cl.: H04R 25/00, H04M 9/08

(54) **VERFAHREN ZUR REDUKTION VON ECHO IN EINEM HÖRINSTRUMENT**
METHOD FOR REDUCING ECHO IN A HEARING INSTRUMENT
PROCÉDÉ DE RÉDUCTION D'ÉCHO DANS UN INSTRUMENT AUDITIF

(30) Priorität: 24.02.2022 DE 102022201942
(43) Veröffentlichungstag der Anmeldung: 30.08.2023
(73) Patentinhaber: Sivantos Pte. Ltd., Singapore 539775 (SG)
(72) Erfinder: WURZBACHER, Tobias, 91058 Erlangen (DE); PUDER, Henning, 91058 Erlangen (DE)
(74) Vertreter: FDST Patentanwälte

(56) Entgegenhaltungen:
- EP-B1- 1 020 068
- US-A1- 2005 286 714
- US-A1- 2010 303 228

## Beschreibung

Die Erfindung betrifft ein Verfahren zur Reduktion von Echo in einem Hörinstrument, wobei durch einen elektroakustischen ersten Eingangswandler des Hörinstruments aus einem Umgebungsschall ein erstes Eingangssignal erzeugt wird, wobei mittels einer Kommunikationseinrichtung des Hörinstrumentes ein externes Eingangssignal von einem externen Kommunikationsgerät empfangen wird, wobei anhand des ersten Eingangssignals und des externen Eingangssignals des Hörinstruments ein Ausgangssignal erzeugt wird, wobei anhand eines vom Eingangssignal abgeleiteten Zwischensignals ein Übertragungssignal erzeugt wird, das Übertragungssignal mittels der Kommunikationseinrichtung an das externe Kommunikationsgerät übertragen wird.

Als ein Hörinstrument ist generell jedwede Vorrichtung zu verstehen, welche dazu eingerichtet ist, aus einem elektrischen Signal - welches auch durch ein internes Signal der Vorrichtung gegeben sein kann - ein Schallsignal zu erzeugen und einem Gehör eines Trägers dieser Vorrichtung zuzuführen, also insbesondere ein Kopfhörer (z.B. als "Earplug"), ein Headset, eine Datenbrille mit Lautsprecher, etc. Hörinstrumente der genannten Art weisen zunehmend auch eines oder mehrere Mikrofone auf, um z.B. mittels Sprachbefehlen einzelne Funktionen anzusteuern, wie etwa die Auswahl eines Titels aus einer Musikbibliothek. Hörinstrumente der genannten Art werden jedoch zunehmend auch in Verbindung mit mobilen Kommunikationsgeräten wie z.B. Smartphones, Tablet-PCs oder auch Smartwatches etc. verwendet, wobei durch das bzw. die Mikrofone des Hörinstruments über Sprachbefehle einzelne Funktionen des Kommunikationsgerätes ansteuerbar sind (z.B. über eine Bluetooth-Verbindung o.ä. zwischen dem Hörinstrument und dem Kommunikationsgerät).

Derartige Hörinstrumente werden in Verbindung mit einem Kommunikationsgerät der genannten Art zunehmend auch dazu verwendet, die Telekommunikationsfunktionen des Kommunikationsgerätes zu ergänzen, also insbesondere für Anrufe über ein Mobilfunknetz oder VoIP-Anrufe. Dabei wird über das bzw. die Mikrofone des Hörinstruments das Sprachsignal eines Trägers des Hörinstrumentes (welcher auch der Benutzer des Kommunikationsgerätes ist) aufgezeichnet, und über das Kommunikationsgerät an einen Gesprächspartner übertragen. Dies erfolgt meist ohne weitere Beiträge eines im Kommunikationsgerät selbst durch separate dortige Mikrofone aufgezeichneten Audiosignals. Ein Audiosignal mit den Sprachbeiträgen des Gesprächspartners, welches durch ein Kommunikationsgerät (/z.B. ein Telefon o.ä.) des Gesprächspartners aufgezeichnet wurde, wird an das vorliegende Kommunikationsgerät übertragen und von diesem an das Hörinstrument weitergeleitet. Dort wird das besagte Audiosignal mit den Sprachbeiträgen des Gesprächspartners in einen Ausgangswandler (also z.B. einen Lautsprecher) des Hörinstrumente geroutet, sodass der Träger durch die Wiedergabe des Audiosignals die Sprachbeiträge hören kann.

Hierbei kann es jedoch zu einer akustischen Rückkopplung der Sprachbeiträge des Gesprächspartners in das Mikrofon des Hörinstrumentes und somit zu einer Einkopplung besagter Sprachbeiträge in das an den Gesprächspartner zu übertragende Signal kommen. Der Gesprächspartner wird dann seine eigenen Sprachbeiträge mit einer Verzögerung von einigen 10 ms bis zu einigen 100 ms (je nach Art der Verbindung) als Echo hören, was irritierend ist.

Die US 2005 / 0 286 714 A1 nennt eine Vorrichtung zur Echounterdrückung in einer Freisprecheinrichtung, wobei ein Pseudo-Echosignal, das aus einem Empfangsschallsignal erzeugt wird, von einem Echosignal, das auf einem Echo des Empfangsschalls durch Reflexionen bspw. an einer Wand basiert, subtrahiert wird, und dabei ein residuales Echosignal ausgegeben wird. Die Vorrichtung zur Echounterdrückung umfasst weiterhin einen Detektor für den residualen Echo-Pegel durch ein Erkennen einer Vorzeichenumkehr des Echosignals ec und des residualen Echosignals rec und ihrer Amplitudenwerte. Es ist somit möglich, zwischen den positiven und negativen Vorzeichen der besagten Signale zu vergleichen, ohne die Sende-/Empfangsschallerkennung zu verwenden, um die Erzeugung eines Pseudo-Echosignals zu erkennen, wodurch der residuale Echo-Pegel genau geschätzt werden.

Die US 2010 / 0 303 228 A1 nennt einen dualen Echokompensator mit einem aktiven Echokompensator und einem adaptiven Echokompensator. Filterkoeffizienten können von dem adaptiven Echokompensator zu dem aktiven Echokompensator für die Echounterdrückung kopiert werden, basierend darauf, ob der adaptive Echokompensator konvergiert hat. Die Koeffizienten können unter Verwendung einer Kopierlogik kopiert werden, die eine Divergenzerfassung und/oder eine Erkennung von Echopfadänderungen umfassen kann. Die Koeffizienten können mit Hilfe der Kopierlogik auf die Standardeinstellungen zurückgesetzt werden. Die Koeffizienten können unter Verwendung der normalisierten Block-Least-Middle-Squares (NBLMS) berechnet werden, und können berechnet werden, wenn die NBLMS durch die Aktualisierungslogik aktiviert ist. Die Koeffizienten können unter Verwendung von mit linearen Vorhersagekoeffizienten (LPC) gefilterten Uplink- und Downlink-Signalen berechnet werden.

Der Erfindung liegt daher die Aufgabe zugrunde, ein Verfahren für den Betrieb eines Hörinstrumentes anzugeben, in welchem die genannte Art von Echo möglichst wirksam unterdrückt wird, und welche im Hörinstrument möglichst effizient implementierbar ist.

Die genannte Aufgabe wird erfindungsgemäß gelöst durch ein Verfahren zur Reduktion von Echo in einem Hörinstrument, wobei durch einen elektroakustischen ersten Eingangswandler des Hörinstruments aus einem Umgebungsschall ein erstes Eingangssignal erzeugt wird, wobei mittels einer Kommunikationseinrichtung des Hörinstrumentes ein externes Eingangssignal von einem externen Kommunikationsgerät empfangen wird, wobei anhand des ersten Eingangssignals und des externen Eingangssignals, insbesondere in einer Signalverarbeitungseinrichtung des Hörinstruments, ein Ausgangssignal erzeugt wird, wobei anhand des Ausgangssignals in einem adaptiven ersten Filter ein Kompensationssignal zur Reduktion von Echo und/oder von einer akustischen Rückkopplung erzeugt wird, wobei anhand des ersten Eingangssignals und des Kompensationssignals ein Fehlersignal erzeugt wird, welches insbesondere dem adaptiven ersten Filter als Eingangsgröße zugeführt wird, und wobei das Fehlersignal anhand einer Subtraktion des Kompensationssignals vom ersten Eingangssignal erzeugt wird.

Verfahrensgemäß ist hierbei vorgesehen, dass anhand von Filterkoeffizienten des ersten Filters und/oder anhand eines Vergleiches des Fehlersignals mit dem Kompensationssignal und/oder mit dem ersten Eingangssignal eine Kontrollgröße erzeugt wird, dass in Abhängigkeit der Kontrollgröße ein zweites Filter zur Unterdrückung eines residualen Echos bzw. einer residualen Rückkopplung auf ein vom ersten Eingangssignal und insbesondere vom Fehlersignal abgeleitetes Zwischensignal angewandt wird, und hierdurch ein Übertragungssignal erzeugt wird, wobei als Zwischensignal das Fehlersignal oder das Ausgangssignal verwendet wird, und dass das Übertragungssignal mittels der Kommunikationseinrichtung an das externe Kommunikationsgerät übertragen wird, wobei das Kompensationssignal anhand des Ausgangssignals oder des Übertragungssignals erzeugt wird, auf welches das erste Filter angewandt wird, und das erste Filter anhand des Fehlersignals adaptiert wird, und wobei aus dem Ausgangssignal oder aus einem vom Ausgangssignal abgeleiteten Wiedergabesignal durch einen Ausgangswandler des Hörinstrumentes ein Ausgangsschallsignal erzeugt wird. Vorteilhafte und teils für sich gesehen erfinderische Ausgestaltungen sind Gegenstand der Unteransprüche und der nachfolgenden Beschreibung.

Als ein Hörinstrument ist dabei generell eine Vorrichtung der vorbeschriebenen Art umfasst, also insbesondere ein Kopfhörer (z.B. als "Earplug"), ein Headset, eine Datenbrille mit Lautsprecher, etc. Als ein Hörinstrument ist überdies aber auch ein Hörgerät im engeren Sinne umfasst, also ein Gerät zur Versorgung einer Hörschwäche des Trägers, in welchem ein aus einem Umgebungssignal mittels eines Mikrofons erzeugtes Eingangssignal zu einem Ausgangssignal verarbeitet und dabei insbesondere frequenzbandabhängig verstärkt wird, und ein aus dem Ausganssignal (oder aus einem Wiedergabesignal, welches vom Ausgangssignal abgeleitet wird) mittels eines Lautsprechers o.ä. erzeugtes Ausgangsschallsignal dazu geeignet ist, insbesondere benutzerspezifisch die Hörschwäche des Trägers zumindest teilweise zu kompensieren.

Das Hörinstrument weist dabei bevorzugt einen Kommunikationsmodus auf, in welchem mittels der Kommunikationseinrichtung und einem mit dem Hörinstrument über eine entsprechende Verbindung assoziierten Kommunikationsgerät ein Sprachanruf mit einem externen Kommunikationsgerät möglich ist. Das externe Kommunikationsgerät ist dabei bevorzugt durch ein Festnetz-Telefon, Mobiltelefon, einen Tablet-PC o.ä. eines Gesprächspartners eines Trägers des Hörinstrumentes gegeben, das mit dem Hörinstrument assoziierte Kommunikationsgerät durch ein Mobiltelefon des Trägers, welches über Bluetooth o.ä. mit dem Hörinstrument verbunden werden kann, und für den Kommunikationsmodus des Hörinstruments bevorzugt auch verbunden ist.

Das Hörinstrument kann jedoch insbesondere auch dazu eingerichtet sein, im Kommunikationsmodus eine Verbindung zum externen Kommunikationsgerät über WLAN und eine entsprechende Internet-Verbindung aufzubauen, um das externe Eingangssignal vom externen Kommunikationsgerät zu empfangen, und das Übertragungssignal an dieses zu senden.

Die Kommunikationseinrichtung ist bevorzugt als eine Antenne oder als eine andere entsprechend geeignete und eingerichtete Sende-/Empfangsvorrichtung im Hörinstrument gegeben.

Das Ausgangssignal wird bevorzugt derart erzeugt, dass im besagten Kommunikationsmodus während eines Sprachanrufs, welchen der Träger über das Hörinstrument führt, das externe Eingangssignal, welches bevorzugt die Sprachbeiträge eines Gesprächspartners des Sprachanrufes beinhaltet, zusammen mit dem ersten Eingangssignal (welches insbesondere die eigenen Sprachbeiträge des Trägers des Hörinstruments beinhaltet) eingehen. Dabei können die beiden genannten Eingangssignale bei der Erzeugung des Ausgangssignals noch weiteren Verarbeitungsschritten unterzogen werden, und insbesondere noch weitere Signale hinzugefügt und/oder subtrahiert werden. Das Ausgangssignal kann dann bevorzugt als ein Wiedergabesignal durch einen Ausgangswandler des Hörinstruments (z.B. einen Lautsprecher) wiedergegeben werden. Das Wiedergabesignal kann jedoch insbesondere auch, im Fall, dass das zweite Filter auf das Ausgangssignal der Signalverarbeitung angewandt wird, durch das hieraus resultierende Übertragungssignal gegeben sein.

Generell soll hierbei und im Folgenden eine Erzeugung eines resultierenden Signals anhand eines vorangehenden Signals bedeuten, dass die Signalanteile des vorangehenden Signals in das resultierende Signal zumindest in einer Anzahl an Frequenzbändern eingehen, wobei zudem auch noch die Signalanteile weiterer Signale mit eingehen können, oder entsprechende Signalanteile anderer Signale vom vorangehenden Signal oder einem hiervon abgeleiteten Signal subtrahiert werden können. Insbesondere sind auch eine frequenzbandweise Verstärkung sowie frequenzbandweise Kompression bei der Verarbeitung des vorangehenden Signals zum resultierenden Signal möglich. Das resultierende Signal ist dabei dann vom vorangehenden Signal abgeleitet, wenn es anhand des vorangehenden Signals (im hier beschriebenen Sinne) erzeugt wird.

Das adaptive erste Filter zur Erzeugung des Kompensationssignals erhält bevorzugt das Fehlersignal als Eingangsgröße, und modelliert vorzugsweise einen entsprechenden akustischen Rückkopplungspfad von einem Ausgangswandler des Hörinstrumentes, durch welchen das Ausgangssignal (bzw. ein davon abgeleitetes Wiedergabesignal) wiedergegeben wird, bis zum ersten Eingangswandler, sodass die Anwendung des ersten Filters auf das Ausgangssignal eine Abschätzung der akustischen Rückkopplung liefert. Das Fehlersignal wird dabei anhand einer Subtraktion des Kompensationssignals vom ersten Eingangssignal erzeugt.

Das Echo ergibt sich dann insbesondere durch ein Einkoppeln des über besagten Ausgangswandler wiedergegebenen externen Eingangssignals (bzw. Signalanteilen davon) in den ersten Eingangswandler in Form einer akustischen Rückkopplung und somit in das anhand des Eingangssignals erzeugte Zwischensignal. Erfolgt eine Übertragung des Zwischensignals an das externe Kommunikationsgerät, so wird dort ein Gesprächspartner des Trägers seine Sprachbeiträge - de wie beschrieben zu ihm zurückgeführt werden - als Echo hören, wenn das übertragene Zwischensignal wiedergegeben wird. Infolgedessen wird das Zwischensignal mittels des zweiten Filters zum Übertragungssignal weiterverarbeitet, um dieses insbesondere durch die akustische Rückkopplung des externen Eingangssignals bedingte Echo zu unterdrücken. Das erste Filter kann dabei die Unterdrückung der akustischen Rückkopplung bzw. des Echos, insbesondere des Echos der beschriebenen Art, auf eine im Stand der Technik bekannte Weise erzielen.

Das Fehlersignal wird nun mit dem Kompensationssignal verglichen, wobei der Vergleich beispielsweise durch einen reinen Größenvergleich der Amplituden oder der Betragsquadrate oder der Signalpegel erfolgen kann. Hierfür können vorher das Kompensationssignal und/oder das Fehlersignal noch zeitlich geglättet werden, z.B. über eine rekursive Mittelwertbildung o.ä..

Anhand des Vergleiches des Kompensationssignals mit dem Fehlersignal wird eine Kontrollgröße erzeugt, in deren Abhängigkeit das zweite Filter betrieben wird. So kann z.B. die Kontrollgröße lediglich in einem binären Wert bestehen, welcher aus einem Vorzeichen eines Größenvergleiches der Amplituden bzw. Signalpegel (bzw. Betragsquadrate oder allgemein jedweder monotonen Funktion der Beträge) der beiden genannten Signale bestimmt wird. In Abhängigkeit dieses binären Wertes wird dann das zweite Filter mit vorab festgelegten Parameterwerten "eingeschaltet" oder nicht.

Die Kontrollgröße kann jedoch auch in einer stetig monotonen Funktion der Amplituden oder Signalpegel (o.ä.) des Fehlersignals und des Kompensationssignals bestehen, wobei das zweite Filter einerseits in Abhängigkeit des Vorzeichens der besagten Funktion angewandt oder "umgangen" wird (bypass, bzw. Abschalten des zweiten Filters), und wobei im Fall einer Anwendung des zweiten Filters die Stärke der Anwendung wiederum vom Wert der Kontrollgröße abhängt, also insbesondere mit den Amplituden der beiden genannten Signale variiert. Insbesondere kann hierbei auch die Kontrollgröße (alternativ oder zusätzlich zum Kompensations- und/oder Fehlersignal) noch zeitlich geglättet werden.

Alternativ dazu oder auch zusätzlich wir in einer erfindungsgemäßen Ausgestaltung die Kontrollgröße anhand von Filterkoeffizienten des ersten Filters ermittelt. Dies kann insbesondere anhand von Totzeitkoeffizienten erfolgen. Infolge der akustischen Laufzeit zwischen einem Ausgangswandler des Hörinstruments und dem ersten Eingangswandler wird ein durch das erste Filter modellierter Rücckopplungspfad notwendigerweise eine Anzahl an Koeffizienten aufweisen, welche sämtlich identisch Null sind. Es handelt sich dabei um diejenigen Koeffizienten, welche die Übertragungsfunktion des Rückkopplungspfades zu einem Zeitpunkt vor der Ankunft des real rückgekoppelten Ausgangsschalls modellieren.

Einerseits können diese Koeffizienten per Definition zu Null gesetzt werden, und das erste Filter entsprechend zeitlich "verschoben" werden. Andererseits können jedoch auch diese Koeffizienten mit adaptiert werden. Der Abstand dieser Koeffizienten von Null dient dann als ein Indikator, wie gut das erste Filter den realen akustischen Rückkopplungspfad tatsächlich abbildet. Hierbei lässt sich ausnutzen, dass Fehler in der Adaption sich "im Mittel" gleichmäßig über die einzelnen Koeffizienten eines Filters verteilen. Durch die Quadratsumme der betreffenden Koeffizienten, welche der Laufzeitverzögerung nach Null sein müssten, normiert über die Gesamtenergie aller Koeffizienten, lässt sich also ein quantitatives Maß für die Präzision der Adaption gewinnen. Anhand dieses Maßes lässt sich dann besagte Kontrollgröße ermittelt (z.B. über eine funktionale Abhängigkeit, oder über eine Lookup-Tabelle in Abhängigkeit von der o.g. normierten Quadratsumme der hier beschriebenen, sog. "Totzeit-Koeffizienten").

Das zweite Filter ist dabei dazu eingerichtet, eine residuale Rückkopplung zu unterdrücken, welche im Fehlersignal nach Anwendung des adaptiven ersten Filters zur Unterdrückung der Rückkopplung noch verbleibt. Das zweite Filter wird dabei auf ein vom Fehlersignal abgeleitetes Zwischensignal angewandt, wobei insbesondere auch der triviale Fall der Ableitung umfasst ist, dass das Zwischensignal durch das Fehlersignal selbst gegeben ist. In diesem Fall ist das Wiedergabesignal, welches durch einen Ausgangswandler des Hörinstrumentes in ein Ausgangsschallsignal umgewandelt wird, durch das Ausgangssignal gegeben.

Das zweite Filter kann jedoch auch auf das Ausgangssignal angewandt werden, welches aus dem Fehlersignal durch eine (insbesondere benutzerspezifische und frequenzbandweise Verstärkung und/oder Kompression sowie ggf. Geräuschreduktion und/oder Richtmikrofonie mittels eines zweiten Eingangssignals des Hörinstrumentes umfassende) Signalverarbeitung erzeugt wurde.

Das zweite Filter kann dabei z.B. durch einen Verstärkungs- bzw. Abschwächungsfaktor auf das Zwischensignal und/oder eine Kompression (bzw. eine Änderung der Parameter der Kompression wie z.B. Kompressionsverhältnis oder Kniepunkt der Kennlinie) implementiert sein. Während das zweite Filter prinzipiell auch in der Zeit-Domäne wirken kann, so wird es bevorzugt in der Zeit-Frequenz-Domäne implementiert, und kann dort frequenzbandweise eingesetzt werden (also bspw. durch frequenzbandabhängige Verstärkungsfaktoren zur Abschwächung des Zwischensignals). Ebenfalls ist ein frequenzbandweises adaptives Filter möglich, welches in der Zeit-Frequenz-Domäne für einzelne Frequenzbänder bevorzugt mehrere Filterkoeffizienten aufweist, und durch eine entsprechende Faltung mit dem Zwischensignal im jeweiligen Frequenzband implementiert wird.

Das durch das zweite Filter gefilterten Zwischensignal wird nun als das Übertragungssignal an das externe Kommunikationsgerät übertragen.

Durch die Erfindung wird ausgenutzt, dass das Kompensationssignal infolge des entsprechend ausgelegten ersten Filters (mittels dessen eine Rückkopplung unterdrückt werden soll) mehr Anteile vom rückgekoppelten externen Eingangssignal und somit die Sprachbeiträge des Gesprächspartners beinhaltet, während das Fehlersignal nach Behebung der Rückkopplung im Wesentlichen die Sprachbeiträge des Trägers des Hörinstruments beinhaltet. Die Unterdrückung der Rücckopplung durch das Kompensationssignal, welches mittels des ersten Filters erzeugt wird, ist dabei nicht vollständig, weswegen die residuale Rückkopplung noch mittels des zweiten Filter zu unterdrücken ist. Jedoch kann die zeitliche Information hinsichtlich der Sprachbeiträge des Trägers und seines Gesprächspartners, welche im Kompensationssignal und entsprechend auch im Fehlersigna bereits enthalten ist, für die Anwendung des zweiten Filters genutzt werden:
Ist der Signalpegel bzw. die Signalamplitude im Kompensationssignal insbesondere über einen Zeitraum von einer Mehrzahl an Samples (wie z.B. einen Frame) größer als im Fehlersignal, so ist davon auszugehen, dass in diesem Zeitraum der Gesprächspartner aktiv ist, und entsprechend seine Sprachbeiträge im externen Eingangssignal enthalten sind, während der Träger nicht spricht. Umgekehrt sind Signalpegel bzw. Amplitude im Fehlersignal größer, wenn der Träger spricht, jedoch nicht der Gesprächspartner.

Durch den besagten Vergleich der genannten Signale und die hierbei gebildete Kontrollgröße können nun entsprechend die Sprachbeiträge des Gesprächspartners identifiziert werden, und durch das zweite Filter im Zwischensignal unterdrückt werden, bevor das hieraus gebildete Übertragungssignal an das externe Kommunikationsgerät beim Gesprächspartner übertragen wird. Dadurch wird ein Echo beim Gesprächspartner vermieden, welches bei einer Wiedergabe seiner eigenen zurück übertragenen Sprachbeiträge entstehen könnte.

Ein großer Vorteil liegt hierbei in der Verwendung des Fehlersignals und der Kompensationssignals zum Steuern der Unterdrückung der residualen Rückkopplung, da diese beiden Signale durch das adaptive erste Filter ohnehin bereitgestellt werden, und somit kein weitere Rechenleistung (oder entsprechende festverdrahtete Komponenten zur Signalverarbeitung) erforderlich sind.

Günstigerweise wird das zweite Filter in Abhängigkeit eines Vorzeichens des Logarithmus der Kontrollgröße auf das Zwischensignal angewandt. Insbesondere bedeutet dies, dass für ein positives Vorzeichen keine Anwendung erfolgt, wenn für negatives Vorzeichen eine Anwendung erfolgt. Die Kontrollgröße dient somit über das Vorzeichen des Logarithmus - oder bevorzugt einer vergleichbaren, insbesondere äquivalenten mathematischen Implementierung - als ein "Schalter" für das zweite Filter.

Als vorteilhaft erweist es sich, wenn die Kontrollgröße anhand eines Quotienten aus den Amplituden, den Absolutbeträgen, den Betragsquadraten und/oder den Signalpegeln des Fehlersignals und des Kompensationssignals gebildet wird. Insbesondere können bei einer frequenzbandweisen Implementierung des Verfahrens für unterschiedliche Frequenzbänder unterschiedliche der genannten Kenngrößen der beiden Signale für die Bildung des jeweiligen Quotienten im Frequenzband verwendet werden. Insbesondere kann auch eine zeitliche Glättung der jeweiligen Kenngrößen vor der Quotientenbildung erfolgen, etwa mittels einer rekursiven Mittelung. Anhand eines Quotienten lässt sich besonders einfach abschätzen, ob die Signalbeiträge im Kompensationssignal überwiegen, oder im Fehlersignal.

Bevorzugt weist das zweite Filter eine stetig monotone Abhängigkeit von der Kontrollgröße auf. Besonders bevorzugt erfolgt dabei die Anwendung des zweiten Filters auf das Zwischensignal in Abhängigkeit des Vorzeichens des Logarithmus der Kontrollgröße (oder einer mathematisch äquivalenten Funktion). Beispielsweise kann ein Verstärkungsfaktor zur Abschwächung des Zwischensignals als monotone Funktion der Kontrollgröße auf das Zwischensignal angewandt werden, wenn anhand des Vorzeichens des Logarithmus der Kontrollgröße erkannt wird, dass die Signalbeiträge im Kompensationssignal überwiegen.

In einer vorteilhaften Alternative wird das zweite Filter mit einem vorab festgelegten, von einem Betrag der Kontrollgröße insbesondere unabhängigen Parameterwert betrieben. Dies bedeutet insbesondere, dass die Kontrollgröße lediglich als besagter "Schalter" für das zweite Filter verwendet wird, jedoch das zweite Filter keine weitere Abhängigkeit vom Betrag der Kontrollgröße (bei gleichbleibendem Vorzeichen des Logarithmus) aufweist. Der Betrieb mit vorab festgelegten Parametern wie z.B. Verstärkungsfaktoren für eine fixe Abschwächung spart dabei weitere rechnerische Ressourcen.

In vorteilhaften Ausgestaltungen wird durch das zweite Filter ein Verstärkungsfaktor und/oder eine Kompression auf das Zwischensignal zu dessen Abschwächung angewandt, wobei im Fall der Kompression insbesondere ein Kompressionsparameter, z.B. ein Kompressionsverhältnis und/oder ein Kniepunkt einer Kompressionskennlinie, in (insbesondere stetig monotoner) Abhängigkeit der Kontrollgröße eingestellt werden kann.

Bevorzugt wird das zweite Filter in der Zeit-Frequenz-Domäne auf eine Anzahl an Frequenzbändern des Zwischensignals angewandt. Dabei können dann durch das zweite Filter einzelne frequenzbandweise Verstärkungsfaktoren und/oder Kompressionen auf wenigstens einige Frequenzbänder des Zwischensignals angewandt werden.

Insbesondere kann das zweite Filter alternativ dazu oder auch zusätzlich in einer Anzahl an Frequenzbändern als ein zweites adaptives Filter mit mehr jeweils als einem Filterkoeffizienten auf das Zwischensignal angewandt werden. Dies bedeutet, dass die Unterdrückung des Rückkopplung sich aufteilt in das erste Filter, und in einzelnen Frequenzbändern, in welchen durch die residuale Rückkopplung die Sprachbeiträge die Gesprächspartners an diesen als Echo zurückgeführt werden, in das besagte adaptive zweite Filter. Das zweite Filter kann dann z.B. als ein FIR- oder IIR-Filter mittels einer Faltung von wenigstens zwei Samples des Zwischensignals im Frequenzband implementiert werden, wobei Filterkoeffizienten bspw. durch einen NLMS-Algorithmus ermittelt werden können.

Zweckmäßigerweise wird auf das Zwischensignal oder auf ein vom Zwischensignal abgeleitetes Signal des Hörinstrumentes zur Erzeugung eines Wiedergabesignal eine nicht-lineare Verarbeitung angewandt, insbesondere eine Frequenzverzerrung wie z.B. eine Frequenzverschiebung. Das Wiedergabesignal wird dabei bevorzugt durch einen elektroakustischen Ausgangswandler des Hörinstrumentes wiedergegeben. Hierdurch kann das Wiedergabesignal zusätzlich von den Eingangssignalen dekorreliert werden, um die Rückkopplungsschleife, gebildet aus dem akustischen Rückkopplungspfad um das Hörinstrument und aus seiner internen Signalverstärkung, zu unterbrechen.

Erfindungsgemäß wird das Kompensationssignal anhand des Ausgangssignals oder des Übertragungssignals erzeugt, auf welches das erste Filter angewandt wird, wobei das erste Filter anhand des Fehlersignals adaptiert wird. Das Fehlersignal dient dem ersten Filter dabei als Maß für die Qualität der Adaption (z.B. in einem NLMS-Algorithmus).

Hierbei wird als Zwischensignal direkt das Fehlersignal oder das Ausgangssignal verwendet. Im Fall des Ausgangssignals durchläuft also das Fehlersignal noch die interne Signalverarbeitung des Hörinstrumentes, welche somit auch in das Übertragungssignal eingeht. Soll das Übertragungssignal nicht von der internen Signalverarbeitung des Hörinstrumentes beeinflusst werden, wird als Zwischensignal das Fehlersignal verwendet, aus welchem das Übertragungssignal durch die Anwendung des zweiten Filters erzeugt wird.

Die Erfindung nennt weiter ein Hörinstrument, umfassend einen elektroakustischen ersten Eingangswandler zur Erzeugung eines ersten Eingangssignals aus einem Umgebungsschall, eine Kommunikationseinrichtung zum Empfang eines externen Eingangssignals von einem externen Kommunikationsgerät und zum Senden eines Übertragungssignals des Hörinstrumentes an die externe Kommunikationsgerät, eine Signalverarbeitungseinrichtung, welche dazu eingerichtet ist, anhand des ersten Eingangssignals und des externen Eingangssignals ein Ausgangssignal zu erzeugen, und einen Ausgangswandler zum Erzeugen eines Ausgangsschallsignals aus dem Ausgangssignal oder aus einem vom Ausgangssignal abgeleiteten Wiedergabesignal.

Hierbei ist im Hörinstrument ein adaptives erstes Filter implementiert, welches dazu eingerichtet ist, anhand des Ausgangssignals ein Kompensationssignal zur Reduktion von Echo und/oder von einer akustischen Rückkopplung zu erzeugen, wobei das Kompensationssignal anhand des Ausgangssignals oder des Übertragungssignals erzeugt wird, auf welches das erste Filter angewandt wird, und das erste Filter anhand des Fehlersignals adaptiert wird, wobei die Signalverarbeitungseinrichtung weiter dazu eingerichtet ist, anhand des ersten Eingangssignals und des Kompensationssignals ein Fehlersignal zu erzeugen, wobei das Fehlersignal anhand einer Subtraktion des Kompensationssignals vom ersten Eingangssignal erzeugt wird, und anhand eines Vergleiches des Fehlersignals mit dem Kompensationssignal eine Kontrollgröße zu erzeugen.

Ferner ist im Hörinstrument ein zweites Filter implementiert, welches dazu eingerichtet ist, ein residuales Echo bzw. eine residuale Rückkopplung in einem vom ersten Eingangssignal und insbesondere vom Fehlersignal abgeleiteten Zwischensignal zu unterdrücken, wobei als Zwischensignal das Fehlersignal oder das Ausgangssignal verwendet wird, und hierdurch das Übertragungssignal zu erzeugen.

Das erfindungsgemäße Hörinstrument teilt die Vorzüge des erfindungsgemäßen Verfahrens. Die für das Verfahren und für seine Weiterbildungen angegebenen Vorteile können sinngemäß auf das Hörinstrument übertragen werden. Vorteilhafte Ausführungen des Verfahrens werden dabei bevorzugt durch entsprechende Ausgestaltungen des Hörsystems umgesetzt.

Nachfolgend wird ein Ausführungsbeispiel der Erfindung anhand von Zeichnungen näher erläutert. Hierbei zeigen jeweils schematisch:
- Fig. 1: in einem Blockschaltbild ein Hörinstrument, mittels dessen in einem Ferngespräch Sprachbeiträge des Trägers zu einem externen Kommunikationsgerät gesendet werden,
- Fig. 2: in einem Blockschaltbild das Hörinstrument nach Fig. 1, mittels dessen Sprachbeiträge des Gesprächspartners im Ferngespräch empfangen werden, welche eine Rückkopplung erfahren,
- Fig. 3: in einem Blockschaltbild eine Ausgestaltung des Hörinstrumentes nach Fig. 1, durch welche die Rückkopplung nach Fig. 2 unterdrückt werden kann, und
- Fig. 4: in einem Zeitdiagramm eine Kontrollgröße für die Unterdrückung der Rückkopplung in der Ausgestaltung gemäß Fig. 3.

Einander entsprechende Teile und Größen sind in allen Figuren jeweils mit denselben Bezugszeichen versehen.

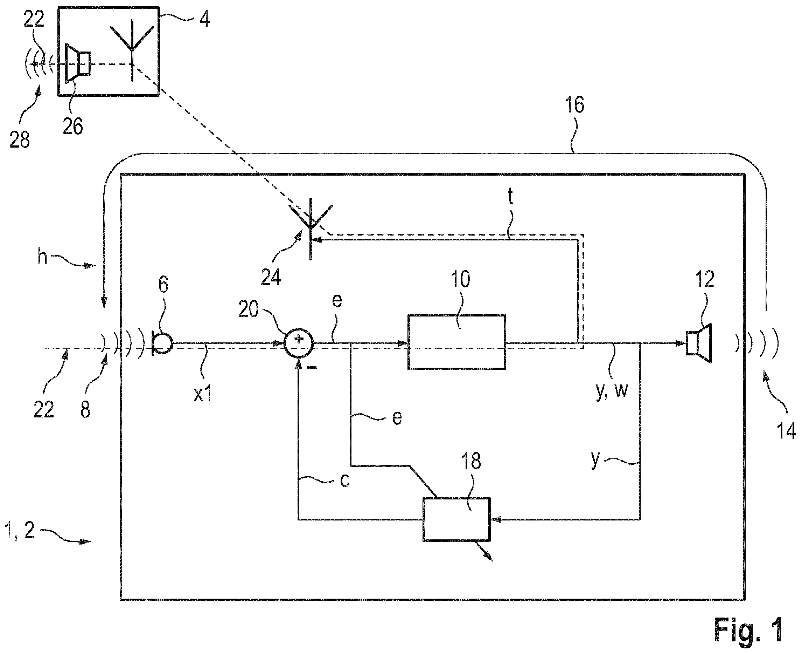

In Figur 1 ist schematisch in einem Blockschaltbild ein Hörinstrument 1 dargestellt, welches vorliegend durch ein Hörgerät 2 (im engeren Sinne) gegeben ist. Das Hörinstrument 1 ist dabei dazu eingerichtet, dass ein Träger (nicht dargestellt) des Hörinstrumentes 1 mittels desselben ein Ferngespräch, also z.B. einen Telefon- oder VoIP-Anruf, mit einem Gesprächspartner (nicht dargestellt) führen kann, welcher sich seinerseits hierzu eines Kommunikationsgerätes wie zum Beispiel eines Mobiltelefons bedient, welches in der Figur 1 als externes Kommunikationsgerät 4 dargestellt ist.

Das Hörinstrument 1 weist einen elektroakustischen ersten Eingangswandler 6 auf, welcher vorliegend durch ein Mikrofon gegeben ist, und welcher dazu eingerichtet ist, aus einem Umgebungsschall 8 des Hörinstrumentes 1 ein erstes Eingangssignal x1 zu erzeugen. In noch zu beschreibender Weise wird das erste Eingangssignal x1 einer Signalverarbeitungseinrichtung 10 zugeführt, in welcher anhand von Signalanteilen des ersten Eingangssignal x1 ein Ausgangssignal y erzeugt wird. Besagtes Ausgangssignal y wird, als ein Wiedergabesignal w, durch einen elektroakustischen Ausgangswandler 12 des Höheninstrumentes 1 in einen Ausgangsschall14 umgewandelt. Der Ausgangswandler 12 ist hierbei vorliegend durch einen Lautsprecher gegeben. Vom Ausgangswandler 12 gelangen Teile des Ausgangsschalls 14 über einen akustischen Rückkopplungspfad 16 zum ersten Eingangswandler 6, sodass hierdurch eine akustische Rückkopplung h des Ausganssignals Y erfolgt. Das Hörinstrument kann auch einen zweiten Eingangswandler (nicht dargestellt) aufweisen, welcher entsprechend ein zweites Eingangssignal erzeugt, das zusammen mit dem ersten Eingangssignal insbesondere mittels Richtmikrofonie verarbeitet wird.

Zur Unterdrückung der Rückkopplung h ist im Hörinstrument 1 ein adaptives erstes Filter 18 implementiert, welches auf das Ausgangssignal y angewandt wird, und aus diesem ein Kompensationssignal c erzeugt. Das Kompensationssignal c wird an einer ersten Node 20 vom ersten Eingangssignal x1 subtrahiert, sodass hieraus ein Fehlersignal e erzeugt wird. Das Fehlersignal e wird hierbei dem adaptiven ersten Filter 18 zugeführt wird, um dort die Qualität der Adaption anhand des Fehlersignals e abzuschätzen. Das erste Filter 18 und die erste Node 20 können hierbei physisch in der Signalverarbeitungseinrichtung 10 implementiert sein, welche das Fehlersignal e durch eine insbesondere individuell auf audiologischen Bedürfnisse des Trägers abgestimmte Signalverarbeitung mittels frequenzbandabhängiger Verstärkung und/oder Kompression zum Ausgangssignal y weiterverarbeitet. Aus Gründen der Übersichtlichkeit ist die Signalverarbeitungseinrichtung 10 in Figur 1 jedoch lediglich als jener Blog der Signalverarbeitung aufzufassen, in welchem besagte, "eigentliche" Verarbeitung des Fehlersignals e zum Ausgangssignal y erfolgt.

Im besagten Ferngespräch werden Sprachbeiträge 22 des Trägers des Hörinstrumentes 1 durch den ersten Eingangswandler 6 im ersten Eingangssignal x1 aufgezeichnet, an der Node 20 für eine Korrektur der akustischen Rückkopplung h um das Kompensationssignal c verringert, und in der Signalverarbeitungseinrichtung 10 zum Ausgangssignal y verarbeitet (gestrichelte Linie). Hierbei können auch noch weitere Algorithmen der Rauschunterdrückung und/oder Sprachanhebung ("speech enhancement") erfolgen. Das Ausgangssignal y wird als ein Übertragungssignal t einer Kommunikationseinrichtung 24 des Hörinstrumentes 1 zugeführt, welche z.B. durch eine Antenne für Bluetooth oder WLAN gegeben sein kann. Mittels der Kommunikationseinrichtung 24 wird dann das Übertragungssignal t, welches die Sprachbeiträge 22 des Trägers enthält, an das externe Kommunikationsgerät 4 übertragen. Dort wird aus dem Übertragungssignal t mittels eines Lautsprechers 26 ein externer Wiedergabeschall 28 erzeugt, sodass der Gesprächspartner entsprechend die Sprachbeiträge 22 hören kann.

Die Übertragung des Übertragungssignals t an das externe Kommunikationsgerät 4 kann dabei insbesondere anhand eines lokalen Kommunikationsgerätes (nicht dargestellt) des Trägers des Hörinstrumentes 1 erfolgen, welches über die Kommunikationseinrichtung 24 mit dem Hörinstrument 1 verbunden wird, und das Übertragungssignal t an das externe Kommunikationsgerät 4 weiterleitet. Das lokale Kommunikationsgerät kann dabei insbesondre als ein Smartphone o.ä. gegeben sein. Das Hörinstrument 1 kann jedoch auch direkt über die Kommunikationseinrichtung 24 per WLAN eine Internet-Verbindung aufweisen, sodass das Ferngespräch mit dem externen Kommunikationsgerät 4 als VolP-Anruf durchgeführt wird.

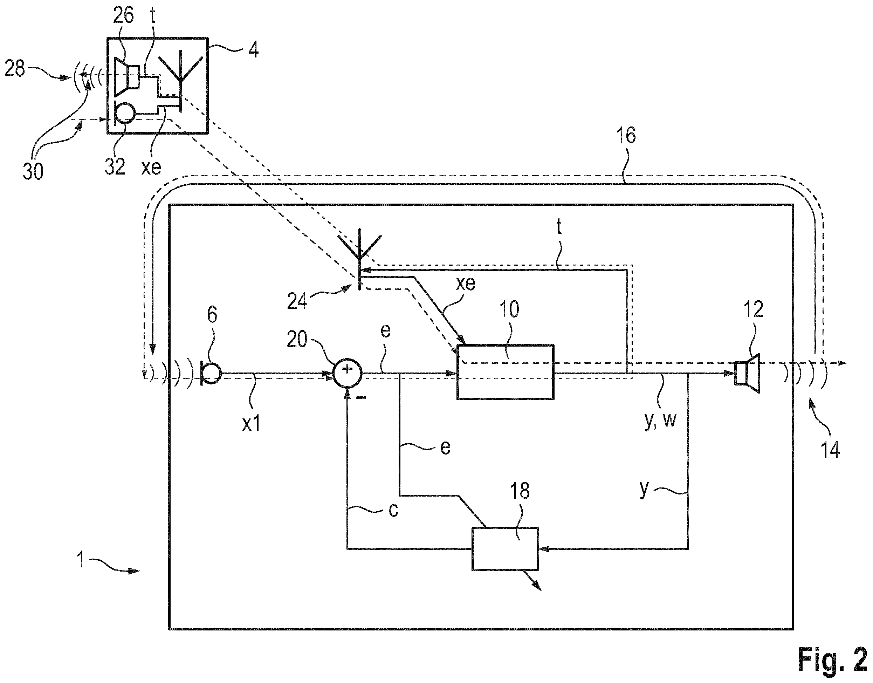

In Figur 2 ist schematisch in einem Blockschaltbild das Hörinstrument 1 nach Figur 1 für den Fall dargestellt, dass im Ferngespräch nun der Gesprächspartner spricht. Mittels eines Mikrofons 32 des externen Kommunikationsgerätes 4 wird ein externes Eingangssignal xe erzeugt, welches Sprachbeiträge 30 (gestrichelte Linie) des Gesprächspartners enthält. Das externe Eingangssignal xe mit den Sprachbeiträgen 30 wird an das Hörinstrument 1 übertragen, und dort mittels der Kommunikationseinrichtung 24 empfangen. Die Übertragung erfolgt dabei in eben beschriebener Weise.

Das externe Eingangssignal xe wird nun zusammen mit dem Fehlersignal e in der Signalverarbeitungseinrichtung 10 zum Ausgangssignal y verarbeitet. Das Fehlersignal e, welches gemäß Figur 1 die eigenen Sprachbeiträge 22 des Trägers des Hörinstrumentes 1 beinhaltet, wird dabei mit ins Ausgangssignal y (also somit ins Wiedergabesignal w) geführt, da es sonst für den Träger unangenehm wäre, seine eigene Stimme nicht im Ausgangsschall 14 zu hören, wenn er spricht.

In Figur 2 sind jedoch lediglich die Sprachbeiträge 30 des Gesprächspartners im Ausgangssignal y und entsprechen im Ausgangsschall 14 dargestellt. Über den akustischen Rückkopplungspfad 16 vom Ausgangswandler 12 zum ersten Eingangswandler 6 finden die Sprachbeiträge 30 des Gesprächspartners Eingang in das erste Eingangssignal x1 (und ggf. in ein zweites Eingangssignal eines zweiten Mikrofons des Hörinstruments), und somit auch in das Fehlersignal e. Entsprechend werden diese Sprachbeiträge nach Verarbeitung in der Signalverarbeitungseinrichtung 10 (und dabei erfolgender Verstärkung) erneut ins Ausgangssignal y überführt. Die Sprachbeiträge 30 haben somit ein Mal eine geschlossene Rückkopplungsschleife im Hörinstrument 1 durchlaufen. Da nun das Ausgangssignal y als Übertragungssignal t an das externe Kommunikationsgerät 4 übertragen wird, aus welchem dort durch den Lautsprecher 26 der externe Wiedergabeschall 28 erzeugt wird, werden entsprechend die Sprachbeiträge 30 des Gesprächspartners im externen Wiedergabeschall 28 für den Gesprächspartner als Echo hörbar.

Auch wenn die Rückkopplung durch das adaptive erste Filter 18 unterdrückt wird, so beträgt diese Unterdrückung üblicherweise 15 dB bis 25 dB. Es wird jedoch empfohlen (u.a. von der ITU-T), in Ferngesprächen mittels Hörinstrumenten das Wiedereinkoppeln des "Fernmeldesignals" (also des empfangenen Signals) durch akustische Rückkopplung um mindestens 35 dB zu unterdrücken. Die nach der Unterdrückung mittels des ersten Filters 18 verbleibende residuale Rückkopplung ist somit als hoch relevant zu bezeichnen. Die Sprachbeiträge 30 verbleiben also auch nach" Korrektur der akustischen Rückkopplung h durch das Kompensationssignal c im Fehlersignal e (gepunktete Linie), wenn auch schwächer, und werden entsprechend an das externe Kommunikationsgerät 4 übertragen, und dort im externen Wiedergabeschall 28 mit ausgegeben.

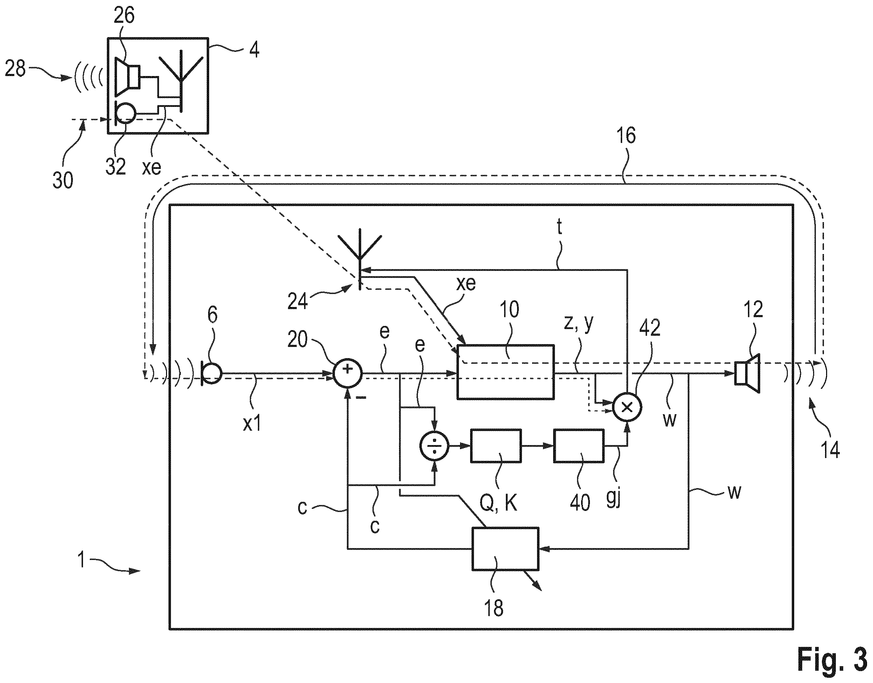

In Figur 3 ist schematisch in einem Blockschaltbild eine Weiterbildung des Hörinstrumentes 1 nach Figur 1 und Figur 2 darstellt, welche eine Unterdrückung der besagten residualen Rückkopplung ermöglicht. Der Übersichtlichkeit halber sei hierbei lediglich der Signalfluss für die Sprachbeiträge 30 des Gesprächspartners eingezeichnet, welcher am Ort des externen Kommunikationsgerätes 4 und unmittelbar durch dieses kommuniziert. Gleichzeitig bzw. in schnellem Wechsel hierzu finden jedoch auch Sprachbeiträge 22 des Trägers des Hörinstruments 1 statt, wie in Figur 1 dargestellt. Für diese ist der Signalfluss entsprechend dem in Fig. 1 gezeigten.

Wie im anhand von Figur 2 gezeigten Ferngespräch, wird auch in Figur 3 von der externen Kommunikationseinheit 4 durch das Mikrofon 32 das externe Eingangssignal xe erzeugt, welches die Sprachbeiträge 30 des Gesprächspartners beinhaltet. Der Signalfluss für das externe Eingangssignal xe und somit für die besagten Sprachbeiträge 30 (gestrichelte und gepunktete Linien) entspricht bis hin zur ersten Node 20 dem Signalfluss gemäß Figur 2, mit Ausnahme einer im Signalfluss neu hinzukommenden zweiten Node 42 und der sich hieraus ergebenden, nachfolgend beschriebenen Konsequenzen.

Jedoch weist das Hörinstrument 1 im vorliegenden, erfindungsgemäßen Ausführungsbeispiel nun ein zweites Filter 40 auf, welches zur Unterdrückung der residualen Rückkopplung (nach Kompensation durch das Kompensationssignal c) vorgesehen und eingerichtet ist. Dieses zweite Filter 40 ist dabei allgemein auf ein Zwischensignal z anzuwenden, welches vom Eingangssignal e (in welchem ja die über den akustischen Rückkopplungspfad 16 propagierten Sprachbeiträge 30 eingehen) und insbesondere vom Fehlersignal e (welches ja bereits um das Kompensationssignal c von Rückkopplungen bereinigt ist) abgeleitet ist. Im vorliegenden Fall ist das Zwischensignal z durch das aus der Signalverarbeitungseinheit 10 resultierende Ausgangssignal y gegeben, auf welches, wie nachfolgend beschrieben, durch das zweite Filter 40 an der zweiten Node 42 frequenzbandweise einzelne Verstärkungsfaktoren gj angewandt werden. Das Zwischensignal z entspricht somit dem Ausgangssignal y nach Figur 1 und 2. Das Zwischensignal z kann jedoch in einer anderen, nicht dargestellten Ausführungsform auch durch das Fehlersignal e gegeben sein.

Das zweite Filter 40 kann in einzelnen Frequenzbändern auch eine Kompression auf das Zwischensignal z anwenden, und/oder als ein "echtes" adaptives Filter arbeiten, wobei einzelne Filterkoeffizienten etwa über einen NLMS-Algorithmus bestimmt werden können. Das zweite Filter 40 und die dazu nachfolgend erklärte Steuerung sind bevorzugt physisch in der Signalverarbeitungseinrichtung 10 zu implementieren, werden jedoch aus Gründen der Übersichtlichkeit für die Darstellung in Figur 3 von der "eigentlichen" Signalverarbeitung (z.B. frequenzbandweise Verstärkung, insbesondere in Abhängigkeit von audiologischen Anforderungen des Trägers etc.) getrennt.

Für den Betrieb des zweiten Filters 40 wird aus dem Fehlersignal e und dem Kompensationssignal c frequenzbandweise jeweils ein Quotient Q gebildet. Dieser Quotient Q bildet dabei eine Kontrollgröße K für das zweite Filter 40. Zunächst werden durch das Vorzeichen des Logarithmus des Quotienten Q (oder äquivalent dazu, durch einen >/<-Vergleich des Quotienten mit 1) diejenigen zeitlichen Signalanteile im ersten Eingangssignal x1 bzw. im Fehlersignal e ermittelt, in welchen Sprachbeiträge 30 des Gesprächspartners vorliegen. Für diese wird das zweite Filter 40 grundsätzlich auf das Ausgangssignal y angewandt, wobei die frequenzbandweisen Verstärkungsfaktoren gj ebenfalls abhängig vom Wert des Quotienten Q sind. Liegen jedoch keine Sprachbeiträge 30 des Gesprächspartners vor, ist es auch nicht erforderlich, eine residuale Rückkopplung zu unterdrücken, da der Gesprächspartner kein Echo wahrnehmen wird.

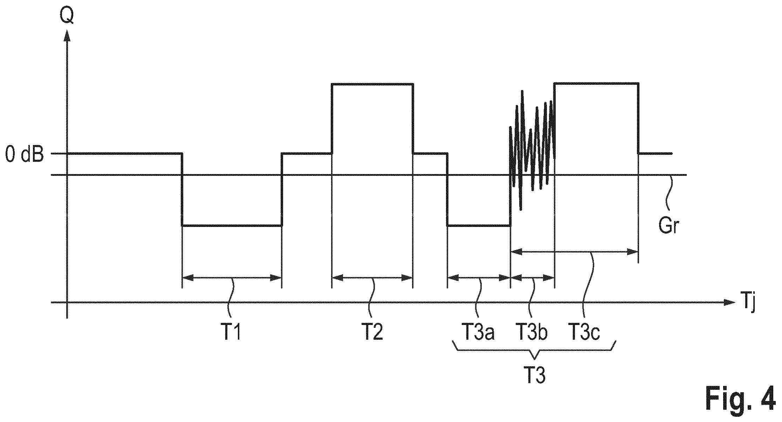

Die Abhängigkeit der Anwendung des zweiten Filters 40 vom Quotienten Q als der Kontrollgröße K im jeweiligen Frequenzband ist anhand Figur 4 kurz skizziert. Figur 4 zeigt für ein nicht näher bestimmtes Frequenzband den besagten Quotienten Q in dB aus den Fehlersignal e und dem Kompensationssignal c nach Figur 3, gegen eine Zeitachse Tj aufgetragen.

In einem ersten Zeitfenster T1 liegt der Wert des Quotienten Q unter 0 dB, das Kompensationssignal c überwiegt also. Da im Fehlersignal die Sprachbeiträge 22 des Trägers des Hörinstruments 1 eingehen, während das Kompensationssignal c als Abbild des rückgekoppelten Ausgangssignals y beide Sprachbeiträge 22, 30 (je nachdem, wer gerade spricht) beinhalten kann, kann bei einem Überwiegen des Kompensationssignals c über das Fehlersignals e davon ausgegangen werden, dass im Wesentlichen lediglich Sprachbeiträge 30 des Gesprächspartners vorliegen. In diesem Fall - also für das erste Zeitfenster T1 - wird das zweite Filter 40 nach Figur 3 auf das Ausgangssignal y angewandt.

In einem zweiten Zeitfenster T2 liegt der Wert des Quotienten Q über 0 dB, das Fehlersignal e überwiegt also. Das zweite Filter 40 bleibt somit ausgeschaltet (für den Zeitraum zwischen dem ersten und zweiten Zeitfenster T1, T2 liegt der Wert des Quotienten bei exakt 0 dB, hierfür wird davon ausgegangen, dass weder der Träger noch der Gesprächspartner spricht, auch für Q = 0 dB bleibt das zweite Filter 40 ausgeschaltet).

In einem ersten Segment T3a eines dritten Zeitfensters T3 liegt der Wert des Quotienten Q zunächst unter 0 dB, in einem sich daran anschließenden zweiten Segment T3b des dritten Zeitfensters T3 fluktuiert der Quotient stark um 0 dB, um danach in einem dritten Segment T3c des dritten Zeitfensters T3 einen stabilen Wert oberhalb von 0 dB einzunehmen. Für das erste Segment T3a wird, wie im ersten Zeitfenster T1, von Sprachbeiträgen 30 nur durch den Gesprächspartner ausgegangen, und das zweite Filter 40 entsprechend angewandt. Für das dritte Segment T3c wird, wie im zweiten Zeitfenster T2, von Sprachbeiträgen 22 nur durch den Träger des Hörinstruments 1 ausgegangen, und das zweite Filter 40 entsprechend ausgeschaltet.

Für das zweite Segment T3b wechselt sich die Dominanz von Fehlersignal e und Kompensationssignal c schnell ab, beide Sprachbeiträge 22, 30 existieren gleichzeitig nebeneinander (das Vorzeichen von Q/[dB] folgt dann eher zufälligen Fluktuationen beider Sprachbeiträge 22, 30): Der Träger und der Gesprächspartner reden gleichzeitig bzw. fallen sich ins Wort. Auch hier kann das zweite Filter 40 in der Zeit-Frequenz-Domäne in Abhängigkeit des Vorzeichens von Q/[dB] betrieben werden: In unterschiedlichen Frequenzbändern werden Frequenzbeiträge der beiden Sprechenden voneinander meist zeitlich voneinander getrennt vorzufinden sein (d.h., infolge der Frequenzen von Sprache darf davon ausgegangen werden, dass der Träger und sein Gesprächspartner selten einen Frequenz-Bin der Zeit-Frequenz-Domäne gleichzeitig besetzen). In Figur 4 ist dabei für die Anwendung des zweiten Filters 40 nach Figur 3 ein oberer Grenzwert Gr für den Quotienten Q eingezeichnet, oberhalb dessen die Anwendung ausgesetzt wird.

Der Quotient Q als Kontrollgröße K liefert also im Hörinstrument 1 nach Figur 3 einen Schalter für die Anwendung des zweiten Filters 40. Die Verstärkungsfaktoren gj können dabei in jedem Frequenzband bspw. stetig monoton in Q sein (etwa durch eine direkte Anwendung des jeweiligen Quotienten Q als Verstärkungsfaktor gj, oder durch eine Skalierung mittels einer Exponentialfunktion von Q).

In einer alternativen, nicht dargestellten Ausführungsform kann auch mittels eines langsam reagierenden Minimum-Trackers der minimale Wert für den Quotienten Q (in dB) als Referenzgröße ermittelt werden. Von dieser Referenzgröße wird nun ein Abstand zu einer gewünschten Unterdrückung bestimmt, also z.B. bei einem ermittelten Minimum von Qₘᵢₙ = -20 dB und einer gewünschten Unterdrückung von -35 dB entsprechend ein Abstand von -15 dB. In der Folge kann dann bei einem negativen Wert des Quotienten (in dB) selbst bei Variationen um diesen Wert der konstante Abstandswert (s.o.), ggf. versehen mit einem zusätzlichen Sicherheitspuffer von z.B. weiteren -5 dB, als konstanter Verstärkungsfaktor gj für das zweite Filter 20 bestimmt werden.

Die Verstärkungsfaktoren gj werden dann in beschriebener Abhängigkeit vom Quotienten Q = e/c als der Kontrollgröße K an der zweiten Node 42 auf das durch das Ausgangssignal y gegebene Zwischensignal z angewandt, welches hierzu in einem gesonderten Signalpfad abgezweigt wird. Durch die Anwendung der Verstärkungsfaktoren gj auf das Zwischensignal z wird das Übertragungssignal t erzeugt. Das Wiedergabesignal w wird dabei direkt als das Ausgangssignal y erzeugt. Im Übertragungssignal t, welches an das externe Kommunikationsgerät 4 übertragen und dort durch den Lautsprecher 26 wiedergegeben wird, finden sich nun keine Sprachbeiträge 30 mehr (bzw. nur noch in vernachlässigbarem Umfang; Abbruch der gepunkteten Linie), welche vom Gesprächspartner stammen. Der Gesprächspartner wird seine Sprachbeiträge 30 über den Lautsprecher 26 nicht mehr als "Echo" hören, da diese an der zweiten Node 42 nun im Wesentlichen vollständig unterdrückt wurden. Lediglich die (in Figur 1, jedoch nicht in Figur 3 dargestellten) Sprachbeiträge 22 de Trägers des Hörinstrumentes 1 sind für ihn noch zu hören.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den durch die beigefügten Ansprüche definierten Schutzumfang der Erfindung zu verlassen.

### Bezugszeichenliste

- 1: Hörinstrument
- 2: Hörgerät
- 4: externes Kommunikationsgerät
- 6: erster Eingangswandler
- 8: Umgebungsschall
- 10: Signalverarbeitungseinrichtung
- 12: Ausgangswandler
- 14: Ausgangsschall
- 16: akustischer Rückkopplungspfad
- 18: erstes Filter
- 20: erste Node
- 22: Sprachbeiträge
- 24: Kommunikationseinrichtung
- 26: Lautsprecher
- 28: externer Wiedergabeschall
- 30: Sprachbeiträge
- 32: Mikrofon
- 40: zweites Filter
- 42: zweite Node

- c: Kompensationssignal
- e: Fehlersignal
- gj: Verstärkungsfaktor
- Gr: oberer Grenzwert
- h: Rückkopplung
- K: Kontrollgröße
- Q: Quotient
- t: Übertragungssignal
- T1-T3: erstes, zweites, drittes Zeitfenster
- T3a-T3c: erstes, zweites, drittes Segment
- Tj: Zeitachse
- w: Wiedergabesignal
- x1: erstes Eingangssignal
- xe: externes Eingangssignal
- y: Ausgangssignal
- z: Zwischensignal

## Patentansprüche

1. Verfahren zur Reduktion von Echo in einem Hörinstrument (1),
- wobei durch einen elektroakustischen ersten Eingangswandler (6) des Hörinstruments (1) aus einem Umgebungsschall (8) ein erstes Eingangssignal (x1) erzeugt wird,
- wobei mittels einer Kommunikationseinrichtung (24) des Hörinstrumentes (1) ein externes Eingangssignal (xe) von einem externen Kommunikationsgerät (4) empfangen wird,
- wobei anhand des ersten Eingangssignals (x1) und des externen Eingangssignals (xe) des Hörinstruments (1) ein Ausgangssignal (y) erzeugt wird,
- wobei anhand des Ausgangssignals (y) in einem adaptiven ersten Filter (18) ein Kompensationssignal (c) zur Reduktion von Echo und/oder von einer akustischen Rückkopplung (h) erzeugt wird,
- wobei anhand des ersten Eingangssignals (x1) und des Kompensationssignals (c) ein Fehlersignal (e) erzeugt wird,
- wobei das Fehlersignal (e) anhand einer Subtraktion des Kompensationssignals (c) vom ersten Eingangssignal (x1) erzeugt wird,
- wobei anhand von Filterkoeffizienten des ersten Filters (18) und/oder anhand eines Vergleiches des Fehlersignals (e) mit dem Kompensationssignal (c) und/oder mit dem ersten Eingangssignal (x1) eine Kontrollgröße (K) erzeugt wird,
- wobei in Abhängigkeit der Kontrollgröße (K) ein zweites Filter (40) zur Unterdrückung eines residualen Echos bzw. einer residualen Rücckopplung auf ein vom ersten Eingangssignal (x1) abgeleitetes Zwischensignal (z) angewandt wird, und hierdurch ein Übertragungssignal (t) erzeugt wird,
- wobei als Zwischensignal (z) das Fehlersignal oder das Ausgangssignal (y) verwendet wird,
- wobei das Übertragungssignal (t) mittels der Kommunikationseinrichtung (24) an das externe Kommunikationsgerät (4) übertragen wird,
- wobei das Kompensationssignal (c) anhand des Ausgangssignals (y) oder des Übertragungssignals (t) erzeugt wird, auf welches das erste Filter (18) angewandt wird, und das erste Filter (18) anhand des Fehlersignals (e) adaptiert wird, und
- wobei aus dem Ausgangssignal (y) oder aus einem vom Ausgangssignal (y) abgeleiteten Wiedergabesignal (w) durch einen Ausgangswandler (12) des Hörinstrumentes (1) ein Ausgangsschallsignal (14) erzeugt wird.

2. Verfahren nach Anspruch 1,
wobei das zweite Filter (40) in Abhängigkeit eines Vorzeichens der Kontrollgröße (K) oder eines Vorzeichens des Logarithmus der Kontrollgröße (K) auf das Zwischensignal (z) angewandt wird.

3. Verfahren nach Anspruch 1 oder Anspruch 2,
wobei die Kontrollgröße (K) anhand eines Quotienten (Q) aus den Amplituden, den Absolutbeträgen und/oder den Betragsquadraten des Fehlersignals (e) und des Kompensationssignals (c) gebildet wird.

4. Verfahren nach Anspruch 2 oder Anspruch 3,
wobei das zweite Filter (40) eine funktionale, insbesondere stetig monotone Abhängigkeit von der Kontrollgröße (K) aufweist, und wobei dazu eine Anwendung des zweiten Filters (40) auf das Zwischensignal (z) insbesondere in Abhängigkeit des Vorzeichens der Kontrollgröße (K) oder des Vorzeichens des Logarithmus der Kontrollgröße (K) erfolgt.

5. Verfahren nach Anspruch 2 oder Anspruch 3,
wobei das zweite Filter (40) mit einem vorab festgelegten, von einem Betrag der Kontrollgröße (K) insbesondere unabhängigen Parameterwert betrieben wird.

6. Verfahren nach einem der vorhergehenden Ansprüche,
wobei durch das zweite Filter (40) ein Verstärkungsfaktor (gj) auf das Zwischensignal (z) zu dessen Abschwächung angewandt wird.

7. Verfahren nach einem der vorhergehenden Ansprüche,
wobei durch das zweite Filter (40) eine Kompression auf das Zwischensignal (z) angewandt wird.

8. Verfahren nach einem der vorhergehenden Ansprüche,
wobei das zweite Filter (40) in der Zeit-Frequenz-Domäne auf eine Anzahl an Frequenzbändern des Zwischensignals (z) angewandt wird.

9. Verfahren nach Anspruch 8,
wobei das zweite Filter (40) in einer Anzahl an Frequenzbändern als ein zweites adaptives Filter mit mehr jeweils als einem Filterkoeffizienten auf das Zwischensignal (z) angewandt wird.

10. Verfahren nach einem der vorhergehenden Ansprüche,
wobei auf das Zwischensignal (z) oder auf ein vom Zwischensignal (z) abgeleitetes Signal zur Erzeugung eines Wiedergabesignals (w) eine nicht-lineare Verarbeitung, insbesondere eine Frequenzverzerrung angewandt wird.

11. Hörinstrument (1), umfassend
- einen elektroakustischen ersten Eingangswandler (6) zur Erzeugung eines ersten Eingangssignals (x1) aus einem Umgebungsschall (8),
- eine Kommunikationseinrichtung (24) zum Empfang eines externen Eingangssignals (xe) von einem externen Kommunikationsgerät (4) und zum Senden eines Übertragungssignals (t) des Hörinstrumentes (1) an die externe Kommunikationsgerät (4),
- eine Signalverarbeitungseinrichtung (10), welche dazu eingerichtet ist, anhand des ersten Eingangssignals (x1) und des externen Eingangssignals (xe) ein Ausgangssignal (y) zu erzeugen,
- einen Ausgangswandler (12) zum Erzeugen eines Ausgangsschallsignals (14) aus dem Ausgangssignal (12) oder aus einem vom Ausgangssignal (12) abgeleiteten Wiedergabesignal (w),
wobei im Hörinstrument (1) ein adaptives erstes Filter (18) implementiert ist, welches dazu eingerichtet ist, anhand des Ausgangssignals (y) ein Kompensationssignal (c) zur Reduktion von Echo und/oder von einer akustischen Rückkopplung (h) zu erzeugen, wobei das Kompensationssignal (c) anhand des Ausgangssignals (y) oder des Übertragungssignals (t) erzeugt wird, auf welches das erste Filter (18) angewandt wird, und das erste Filter (18) anhand des Fehlersignals (e) adaptiert wird,
wobei die Signalverarbeitungseinrichtung (10) weiter dazu eingerichtet ist,
- anhand des ersten Eingangssignals (x1) und des Kompensationssignals (c) ein Fehlersignal (e) zu erzeugen, wobei das Fehlersignal (e) anhand einer Subtraktion des Kompensationssignals (c) vom ersten Eingangssignal (x1) erzeugt wird, und
- und anhand von Filterkoeffizienten des ersten Filters (18) und/oder anhand eines Vergleiches des Fehlersignals (e) mit dem Kompensationssignal (c) und/oder mit dem ersten Eingangssignal (x1) eine Kontrollgröße (K) zu erzeugen, und
wobei im Hörinstrument (1) ein zweites Filter (40) implementiert ist, welches dazu eingerichtet ist, ein residuales Echo bzw. eine residuale Rücckopplung (h) in einem vom ersten Eingangssignal (x1) abgeleiteten Zwischensignal (z) zu unterdrücken, wobei als Zwischensignal (z) das Fehlersignal oder das Ausgangssignal (y) verwendet wird, und hierdurch das Übertragungssignal (t) zu erzeugen.

## Claims

1. Method for reducing echo in a hearing instrument (1),
- wherein an electroacoustic first input transducer (6) of the hearing instrument (1) generates a first input signal (x1) from ambient sound (8),
- wherein a communication unit (24) of the hearing instrument (1) is used to receive an external input signal (xe) from an external communication device (4),
- wherein the first input signal (x1) and the external input signal (xe) of the hearing instrument (1) are used to generate an output signal (y),
- wherein the output signal (y) is used in an adaptive first filter (18) to generate a compensation signal (c) for reducing echo and/or acoustic feedback (h),
- wherein the first input signal (x1) and the compensation signal (c) are used to generate an error signal (e),
- wherein the error signal (e) is generated on the basis of a subtraction of the compensation signal (c) from the first input signal (x1),
- wherein filter coefficients of the first filter (18) and/or a comparison of the error signal (e) with the compensation signal (c) and/or with the first input signal (x1) are/is used to generate a control variable (K),
- wherein the control variable (K) is taken as a basis for applying a second filter (40) for rejecting a residual echo or a residual feedback to an intermediate signal (z) derived from the first input signal (x1), and as a result a transmission signal (t) is generated,
- wherein the intermediate signal (z) used is the error signal or the output signal (y),
- wherein the transmission signal (t) is transmitted to the external communication device (4) by means of the communication unit (24),
- wherein the compensation signal (c) is generated on the basis of the output signal (y) or the transmission signal (t) to which the first filter (18) is applied, and the first filter (18) is adapted on the basis of the error signal (e), and
- wherein an output sound signal (14) is generated from the output signal (y) or from a reproduction signal (w) derived from the output signal (y) by an output transducer (12) of the hearing instrument (1).

2. Method according to Claim 1,
wherein the second filter (40) is applied to the intermediate signal (z) according to an arithmetic sign of the control variable (K) or an arithmetic sign of the logarithm of the control variable (K).

3. Method according to Claim 1 or Claim 2,
wherein the control variable (K) is formed on the basis of a quotient (Q) of the amplitudes, the absolute values and/or the squares of the absolute values of the error signal (e) and the compensation signal (c).

4. Method according to Claim 2 or Claim 3,
wherein the second filter (40) has a functional, in particular continuously monotonous, dependency on the control variable (K), and
wherein in this regard the second filter (40) is applied to the intermediate signal (z) in particular according to the arithmetic sign of the control variable (K) or the arithmetic sign of the logarithm of the control variable (K).

5. Method according to Claim 2 or Claim 3,
wherein the second filter (40) is operated with a previously stipulated parameter value that is in particular independent of an absolute value of the control variable (K).

6. Method according to one of the preceding claims,
wherein the second filter (40) applies a gain factor (gj) to the intermediate signal (z) in order to attenuate it.

7. Method according to one of the preceding claims,
wherein the second filter (40) applies a compression to the intermediate signal (z).

8. Method according to one of the preceding claims,
wherein the second filter (40) is applied to a number of frequency bands of the intermediate signal (z) in the time/frequency domain.

9. Method according to Claim 8,
wherein the second filter (40) is applied to the intermediate signal (z) in a number of frequency bands as a second adaptive filter with more than one filter coefficient in each case.

10. Method according to one of the preceding claims,
wherein a non-linear processing, in particular a frequency distortion, is applied to the intermediate signal (z) or to a signal derived from the intermediate signal (z) in order to generate a reproduction signal (w).

11. Hearing instrument (1), comprising
- an electroacoustic first input transducer (6) for generating a first input signal (x1) from ambient sound (8),
- a communication unit (24) for receiving an external input signal (xe) from an external communication device (4) and for transmitting a transmission signal (t) of the hearing instrument (1) to the external communication device (4),
- a signal processing unit (10) configured to use the first input signal (x1) and the external input signal (xe) to generate an output signal (y),
- an output transducer (12) for generating an output sound signal (14) from the output signal (12) or from a reproduction signal (w) derived from the output signal (12),
wherein an adaptive first filter (18) is implemented in the hearing instrument (1), said first filter being configured to use the output signal (y) to generate a compensation signal (c) for reducing echo and/or acoustic feedback (h), wherein the compensation signal (c) is generated on the basis of the output signal (y) or the transmission signal (t) to which the first filter (18) is applied, and the first filter (18) is adapted on the basis of the error signal (e),
wherein the signal processing unit (10) is further configured
- to use the first input signal (x1) and the compensation signal (c) to generate an error signal (e), wherein the error signal (e) is generated on the basis of a subtraction of the compensation signal (c) from the first input signal (x1), and
- to use filter coefficients of the first filter (18) and/or a comparison of the error signal (e) with the compensation signal (c) and/or with the first input signal (x1) to generate a control variable (K), and
wherein a second filter (40) is implemented in the hearing instrument (1), said second filter being configured to reject a residual echo or a residual feedback (h) in an intermediate signal (z) derived from the first input signal (x1), wherein the intermediate signal (z) used is the error signal or the output signal (y), and thereby to generate the transmission signal (t).

## Revendications

1. Procédé de réduction de l'écho dans un appareil auditif (1),
- un premier signal d'entrée (x1) étant généré à partir d'un bruit ambiant (8) par un premier transducteur d'entrée (6) électroacoustique de l'appareil auditif (1),
- un signal d'entrée externe (xe) étant reçu par un dispositif de communication externe (4) au moyen d'un système de communication (24) de l'appareil auditif (1),
- un signal de sortie (y) étant généré à l'aide du premier signal d'entrée (x1) et du signal d'entrée externe (xe) de l'appareil auditif (1),
- un signal de compensation (c) destiné à réduire l'écho et/ou le retour acoustique (h) étant généré à l'aide du signal de sortie (y) dans un premier filtre adaptatif (18),
- un signal d'erreur (e) étant généré à l'aide du premier signal d'entrée (x1) et du signal de compensation (c),
- le signal d'erreur (e) étant généré à l'aide d'une soustraction du signal de compensation (c) du premier signal d'entrée (x1),
- une variable de commande (K) étant générée à l'aide de coefficients de filtrage du premier filtre (18) et/ou à l'aide d'une comparaison du signal d'erreur (e) au signal de compensation (c) et/ou au premier signal d'entrée (x1),
- un deuxième filtre (40) destiné à supprimer un écho résiduel ou un retour résiduel étant appliqué, en fonction de la variable de commande (K), sur un signal intermédiaire (z) dérivé du premier signal d'entrée (x1), et un signal de transmission (t) étant généré ainsi,
- le signal d'erreur ou le signal de sortie (y) étant utilisé en tant que signal intermédiaire (z),
- le signal de transmission (t) étant transmis au dispositif de communication externe (4) au moyen du système de communication (24),
- le signal de compensation (c) étant généré à l'aide du signal de sortie (y) ou du signal de transmission (t), sur lequel le premier filtre (18) est appliqué, et le premier filtre (18) étant adapté à l'aide du signal d'erreur (e), et
- un signal sonore de sortie (14) étant généré à partir du signal de sortie (y) ou à partir d'un signal de restitution (w) dérivé du signal de sortie (y) par un transducteur de sortie (12) de l'appareil auditif (1).

2. Procédé selon la revendication 1,
le deuxième filtre (40) étant appliqué sur le signal intermédiaire (z) en fonction d'un signe de la variable de commande (K) ou d'un signe du logarithme de la variable de commande (K).

3. Procédé selon la revendication 1 ou la revendication 2,
la variable de commande (K) étant obtenue à l'aide d'un quotient (Q) des amplitudes, des valeurs absolues et/ou des valeurs carrées du signal d'erreur (e) et du signal de compensation (c).

4. Procédé selon la revendication 2 ou la revendication 3,
le deuxième filtre (40) présentant une dépendance fonctionnelle, en particulier en permanence monotone, à la variable de commande (K), et
une application du deuxième filtre (40) sur le signal intermédiaire (z) étant effectuée en plus notamment en fonction du signe de la variable de commande (K) ou du signe du logarithme de la variable de commande (K).

5. Procédé selon la revendication 2 ou la revendication 3,
le deuxième filtre (40) fonctionnant avec une valeur de paramètre fixée au préalable, en particulier indépendante d'une valeur de la variable de commande (K)

6. Procédé selon l'une des revendications précédentes, un facteur d'amplification (gj) étant appliqué sur le signal intermédiaire (z) pour l'atténuer par le deuxième filtre (40).

7. Procédé selon l'une des revendications précédentes, une compression étant appliquée sur le signal intermédiaire (z) par le deuxième filtre (40).

8. Procédé selon l'une des revendications précédentes, le deuxième filtre (40) étant appliqué sur un nombre de bandes de fréquence du signal intermédiaire (z) dans le domaine temps-fréquence.

9. Procédé selon la revendication 8,
le deuxième filtre (40) étant appliqué sur le signal intermédiaire (z) en un nombre de bandes de fréquence en tant qu'un deuxième filtre adaptatif avec plus d'un coefficient de filtre respectivement.

10. Procédé selon l'une des revendications précédentes, un traitement non linéaire, en particulier une distorsion de fréquence, étant appliqué sur le signal intermédiaire (z) ou sur un signal dérivé du signal intermédiaire (z) pour générer un signal de restitution (w).

11. Appareil auditif (1) comprenant
- un premier transducteur d'entrée (6) électroacoustique destiné à générer un premier signal d'entrée (x1) à partir d'un bruit ambiant (8),
- un système de communication (24) destiné à recevoir un signal d'entrée externe (xe) d'un dispositif de communication externe (4) et destiné à envoyer un signal de transmission (t) de l'appareil auditif (1) au dispositif de communication externe (4),
- un système de traitement de signaux (10), qui est mis au point pour générer un signal de sortie (y) à l'aide du premier signal d'entrée (x1) et du signal d'entrée externe (xe),
- un transducteur de sortie (12) destiné à générer un signal de bruit de sortie (14) à partir du signal de sortie (12) ou à partir d'un signal de restitution (w) dérivé du signal de sortie (12),
un premier filtre adaptatif (18) étant implémenté dans l'appareil auditif (1), lequel est mis au point pour générer à l'aide du signal de sortie (y) un signal de compensation (c) destiné à réduire l'écho et/ou un retour acoustique (h), le signal de compensation (c) étant généré à l'aide du signal de sortie (y) ou du signal de transmission (t), sur lequel le premier filtre (18) est appliqué, et le premier filtre (18) étant adapté à l'aide du signal d'erreur (e),
le système de traitement de signaux (10) étant par ailleurs mis au point
- pour générer à l'aide du premier signal d'entrée (x1) et du signal de compensation (c) un signal d'erreur (e), le signal d'erreur (e) étant généré à l'aide d'une soustraction du signal de compensation (c) du premier signal d'entrée (x1), et
- pour générer une variable de commande (K) à l'aide de coefficients de filtrage du premier filtre (18) et/ou à l'aide d'une comparaison du signal d'erreur (e) au signal de compensation (c) et/ou au premier signal d'entrée (x1), et
un deuxième filtre (40) étant implémenté dans l'appareil auditif (1), lequel est mis au point pour supprimer un écho résiduel ou un retour résiduel (h) dans un signal intermédiaire (z) dérivé du premier signal d'entrée (x1), le signal d'erreur ou le signal de sortie (y) étant utilisé en tant que signal intermédiaire (z) et pour générer ainsi le signal de transmission (t).
